# EUROPÄISCHE PATENTSCHRIFT

(11) **EP 2 665 904 B1**
(45) Veröffentlichungstag und Bekanntmachung des Hinweises auf die Patenterteilung: **27.04.2016**
(21) Anmeldenummer: 12701448.8
(22) Anmeldetag: 19.01.2012
(51) Int. Cl.: F02C 7/045, F02C 7/24, F02K 1/44, F02K 1/82, F01D 25/30

(54) **SCHALLABSORBER FÜR EINEN GASTURBINENABGASKONUS UND VERFAHREN ZU DESSEN HERSTELLUNG**
SOUND ABSORBER FOR A GAS TURBINE ENGINE EXHAUST CONE AND METHOD FOR PRODUCING SAME
ABSORBEUR ACOUSTIQUE POUR UN CÔNE DE GAZ D'ÉCHAPPEMENT DE TURBINE À GAZ ET SON PROCÉDÉ DE FABRICATION

(30) Priorität: 19.01.2011 DE 102011008920
(43) Veröffentlichungstag der Anmeldung: 27.11.2013
(73) Patentinhaber: Rolls-Royce Deutschland Ltd & Co KG, 15827 Blankenfelde-Mahlow (DE)
(72) Erfinder: TODOROVIC, Predrag, 10437 Berlin (DE)
(74) Vertreter: Hoefer & Partner Patentanwälte mbB
(86) Internationale Anmeldenummer: PCT/EP2012/000243
(87) Internationale Veröffentlichungsnummer: WO 2012/097998

(56) Entgegenhaltungen:
- DE-A1- 2 506 472
- DE-A1- 19 607 290
- DE-B3-102004 012 929
- GB-A- 2 005 384
- US-A- 4 106 587

## Beschreibung

Die Erfindung bezieht sich auf einen Gasturbinenabgaskonus, welcher am Ausströmbereich einer Gasturbine angeordnet ist. Weiterhin bezieht sich die Erfindung auf ein Verfahren zur Herstellung eines Schallabsorbers, insbesondere für einen Gasturbinenabgaskonus.

Bei Gasturbinen für Flugzeugtriebwerke ist es erforderlich, das Geräuschniveau zu senken. Zu diesem Zweck sind auch unterschiedliche Maßnahmen bekannt, um das aus einer Abströmdüse stromab der Turbine austretende Gasstrahlgeräusch zu minimieren.

Aus dem Stand der Technik ist es bekannt, niedrige Frequenzen, die sich insbesondere bei Triebwerken mit Magerverbrennung ergeben, zu dämpfen. Eine Geräuschdämpfung erfolgt dabei über einen Helmholtz-Resonator. Es ist bekannt, in dem Anströmbereich des Abgaskonus einen derartigen Helmholtz-Resonator auszubilden, während der stromab liegende Endbereich des Abgaskonus lediglich als geometrischer Körper ausgebildet ist. Bekannte Helmholtz-Resonatoren werden dabei als System von radialen Wänden und inneren zylindrischen Führungen ausgestaltet und in Abhängigkeit von den Frequenzen dimensioniert.

Bei den bekannten Konstruktionen erweist es sich als nachteilig, dass diese im Hinblick auf die auftretenden Gastemperaturen mechanisch stark belastet sind und deshalb Verstärkungselemente erfordern. Dies führt zu einer ein relativ hohes Gewicht aufweisenden Konstruktion, auch bedingt durch unterschiedliche Wandungen und Versteifungselemente. Zusätzlich ergibt sich eine sehr aufwendige Fertigung. Die Herstellungskosten werden auch noch durch interne Akustik-Maßnahmen (Perforationen oder Ähnliches) erhöht. Auch die axiale Länge eines derartigen Resonators erfordert einen erheblichen Bauraum und bringt zusätzliches Gewicht.

Aus der US 5,670,758 ist ein akustischer Absorber bekannt, bei welchem ein trichterförmiges Element mit einem Napf kombiniert ist. Eine ähnliche Konstruktion zeigt auch die US 5,760,349. Weitere ähnliche Konstruktionen zeigen die DE 10 2004 012 929, die DE 25 06 472 und die DE 196 07 290. Diese Konstruktionen sind insbesondere für die Dämpfung niedrigerer Frequenzen geeignet. Es erweist sich als nachteilig, dass die Herstellung sehr aufwendig ist. Zudem können komplexe dreidimensionale Formen derartiger akustischer Absorber nicht oder nur schwer realisiert werden. Ein weiteres Problem liegt in der Lagerung und Befestigung der einzelnen Absorberelemente. Zudem ergeben sich hinsichtlich der thermischen Expansion und der durch Temperaturbeaufschlagung auftretenden Materialbelastung Probleme in der Anwendung bei Gasturbinen.

Der Erfindung liegt die Aufgabe zugrunde, einen Schallabsorber, insbesondere für einen Gasturbinenabgaskonus der eingangs beschriebenen Art zu schaffen, welcher bei einfachem Aufbau und hoher Dämpfungswirkung kostengünstig herstellbar ist und ein geringes Gewicht aufweist, sowie auf ein Verfahren zu dessen Herstellung.

Erfindungsgemäß wird die Aufgabe durch die Merkmalskombinationen der unabhängigen Ansprüche gelöst, die Unteransprüche zeigen weitere vorteilhafte Ausgestaltungen der Erfindung.

Erfindungsgemäß ist somit vorgesehen, dass der erfindungsgemäße Schallabsorber, der insbesondere für einen Abgaskonus verwendbar ist, eine Außenwandung aufweist, in welcher eine Vielzahl von Ausnehmungen vorgesehen ist. Die Ausnehmungen können als einzelne, singuläre Ausnehmungen oder in Form einer Perforation ausgebildet sein.

Erfindungsgemäß ist innerhalb der Außenwandung des Gasturbinenabgaskonus eine Vielzahl von trichterartigen Kegelelementen angeordnet, welche eine im Durchmesser größere radial nach außen weisende Öffnung und eine kleinere radial nach innen weisende Öffnung aufweisen. Diese einzelnen trichterartigen Kegelelemente sind bevorzugt den Ausnehmungen in der Außenwandung zugeordnet, insbesondere, wenn einzelne, singuläre Ausnehmungen vorgesehen sind. In diesem Fall ist es möglich, das trichterartige Kegelelement exakt zu der Ausnehmung zu positionieren.

Erfindungsgemäß ist weiterhin vorgesehen, dass benachbarte Kegelelemente jeweils an einem streifenförmigen ersten Trägerband angeordnet sind. Die Kegelelemente können dabei entweder durch einen Umformvorgang oder Prägevorgang direkt aus dem Material des streifenförmigen ersten Trägerbandes hergestellt werden. Es ist auch möglich, die trichterartigen Kegelelemente separat zu fertigen und mit dem Trägerband zu fügen, wobei das Trägerband dann entsprechende Ausnehmungen aufweist, um einen Schalleintritt in die trichterartigen Kegelelemente zu ermöglichen.

Der erfindungsgemäße Gasturbinenabgaskonus sieht weiterhin vor, dass radial innerhalb zu den Kegelelementen Napfelemente vorgesehen sind, welche jeweils ein Kegelelement aufnehmen. Die Dimensionierung der Kegelelemente und der Napfelemente ist aufeinander abgestimmt und passend zu den oder der zu absorbierenden Frequenzen dimensioniert. Benachbarte Napfelemente sind, analog den Kegelelementen, jeweils an einem streifenförmigen zweiten Trägerband angeordnet. Auch hierbei ist es möglich, die Napfelemente durch einen Umformvorgang aus dem Trägerelement zu prägen oder die Napfelemente separat herzustellen und mit dem zweiten Trägerband zu fügen, wobei das zweite Trägerband dann entsprechende Ausnehmungen aufweisen muss, um die Kegelelemente in die Napfelemente einzuführen.

Weiterhin ist erfindungsgemäß vorgesehen, dass die ersten Trägerbänder nebeneinander in einer ersten Richtung angeordnet und die zweiten Trägerbänder nebeneinander in einer zweiten Richtung angeordnet sind, wobei sich die Richtungen überkreuzen und die Trägerbänder zu Ausbildung eines starren Körpers miteinander und mit der Außenwandung gefügt sind. Die ersten und zweiten Trägerbänder gestatten es somit, die einzelnen Kegelelemente bzw. Napfelemente einander zuzuordnen. Durch die kreuzweise oder überlappende Anordnung der Trägerbänder ergibt sich zudem eine in sich stabile Gesamtstruktur, die einfach und kostengünstig herstellbar ist. Auf die Verwendung einer separaten Außenwandung kann gegebenenfalls verzichtet werden, da diese durch die gefügten ersten Trägerbänder realisiert werden kann.

Durch die erfindungsgemäße Ausgestaltung ist es möglich, komplexe dreidimensionale Strukturen für den Gasturbinenabgaskonus herzustellen, beispielsweise nicht nur zylindrische Absorberelemente, sondern auch konische, kegelstumpfförmige oder kegelförmige.

In einer günstigen Weiterbildung der Erfindung ist vorgesehen, dass die Trägerbänder in einem Winkel zu einer zentrischen Achse des Gasturbinenabgaskonus angeordnet sind. Es ergibt sich somit eine steife Konstruktion, welche sowohl thermische Belastungen aufnehmen als auch einwirkenden Kräften oder Schwingungen widerstehen kann.

Bevorzugterweise weisen die Kegelelemente in radialer Richtung eine Höhe auf, welche geringer ist als die Tiefe der Napfelemente, so dass die durch die Kegelelemente eintretenden Schallwellen in das Napfelement eintreten können.

In günstiger Weiterbildung der Erfindung kann vorgesehen sein, dass im Bereich der Außenwandung eine Wabenstrukturschicht ausgebildet ist, wobei die Außenwandung in bevorzugter Weiterbildung doppelwandig mit zwischengeordneter Wabenschicht ausgebildet sein kann. Hierdurch ist es möglich, zusätzlich eine Dämpfung oder Absorption von hochfrequenten Schwingungen zu erzielen.

Um eine in sich stabile Gesamtkonstruktion zu schaffen, kann es günstig sein, wenn die Trägerbänder an ihren Endbereichen jeweils mit einem Flansch verbunden sind. Es ist somit möglich, den Gasturbinenabgaskonus aus einzelnen Segmenten zusammenzufügen, beispielsweise aus einem zylindrischen und einem kegelförmigen Element.

In günstiger Weiterbildung kann weiterhin vorgesehen sein, dass radial innerhalb der durch die gefügten zweiten Trägerbänder gebildeten Struktur Versteifungselemente angeordnet sind, die bevorzugterweise länglich ausgebildet sind und die Napfelemente abstützen. Die Versteifungselemente sind bevorzugterweise zwischen benachbarten Reihen von Napfelementen angeordnet. Diese Konstruktion führt zu einer zusätzlichen Versteifung der Gesamtkonstruktion und kann dazu beitragen, insbesondere bei größeren Napfelementen die Schwingungsabsorption zu verbessern, da die Seitenwände und der Boden der Napfelemente zusätzlich abgestützt werden können.

Die erfindungsgemäßen Kegelelemente und Napfelemente können in Axialrichtung des Gasturbinenabgaskonus entweder über dessen gesamte Länge oder über einen axialen Teilbereich der Gesamtlänge vorgesehen sein.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine schematische Darstellung eines Schallabsorbers mit einem trichterförmigen Kegelelement und einem Napfelement,
- Fig. 3: eine perspektivische Teilansicht eines Ausführungsbeispiels des erfindungsgemäßen Gasturbinenabgaskonus zur Darstellung der Zuordnung der Trägerbänder,
- Fig. 4: eine Ansicht, analog Fig. 3,
- Fig. 5, 6: perspektivische Teilansichten der jeweiligen Trägerbänder mit Kegelelementen und Napfelementen,

- Fig. 7: eine schematische Abfolge des Herstellvorganges des erfindungsgemäßen akustischen Absorbers,
- Fig. 8: eine perspektivische Teilansicht auf der Außenseite des Absorbers, und
- Fig. 9: eine perspektivische Teilansicht auf die Innenseite mit zusätzlichen Versteifungselementen.

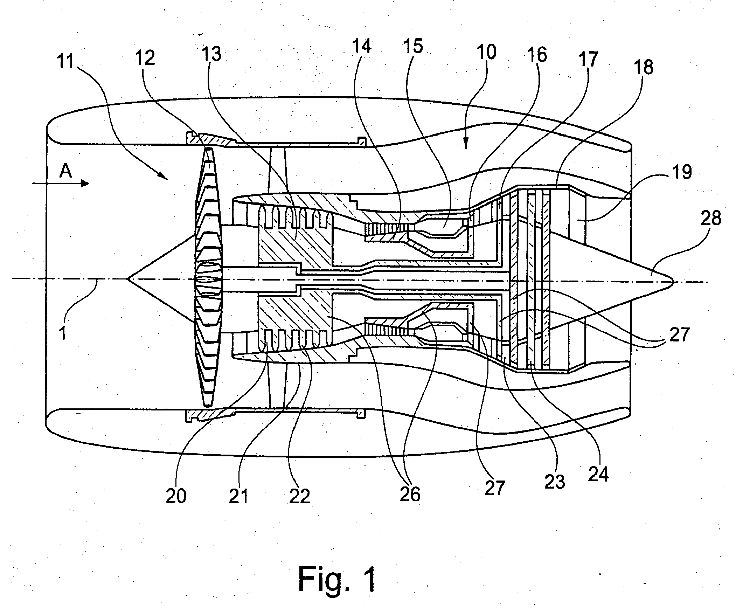

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Die Fig. 1 zeigt mit dem Bezugszeichen 28 einen Gasturbinenabgaskonus.

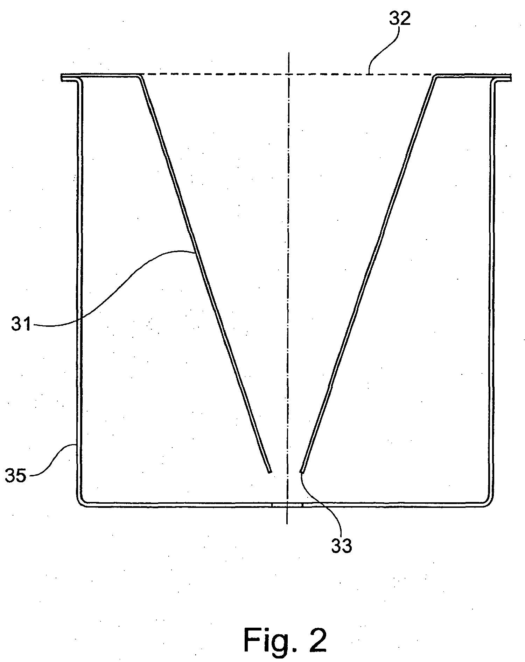

In Fig. 2 ist in schematischer Darstellung ein akustischer Absorber dargestellt, so wie dieser erfindungsgemäß ausgebildet und verwendet wird. Der akustische Absorber umfasst jeweils ein trichterartiges Kegelelement 31, welches eine radial außenliegende Öffnung 32 (obere Öffnung gemäß Fig. 2) aufweist, welche größer ist, als eine radial innenliegende Öffnung 33. Die Fig. 2 zeigt weiterhin, dass das trichterartige Kegelelement 31 in einem Napfelement 35 angeordnet ist, wobei die Öffnung 33 einen Abstand zu dem Boden des Napfelements 35 aufweist. Somit können Schallwellen in das trichterartige Kegelelement 31 eintreten und durch die Öffnung 33 in den Innenraum des Napfelements 35 gelangen. Hierdurch werden insbesondere tiefe Frequenzen absorbiert.

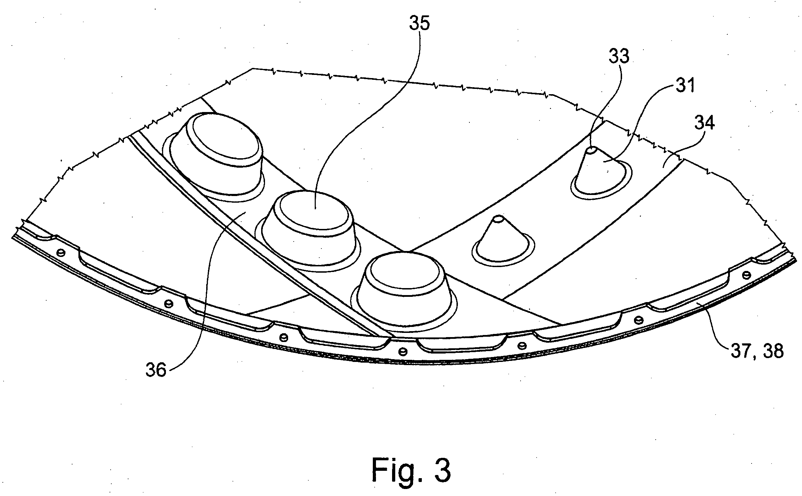

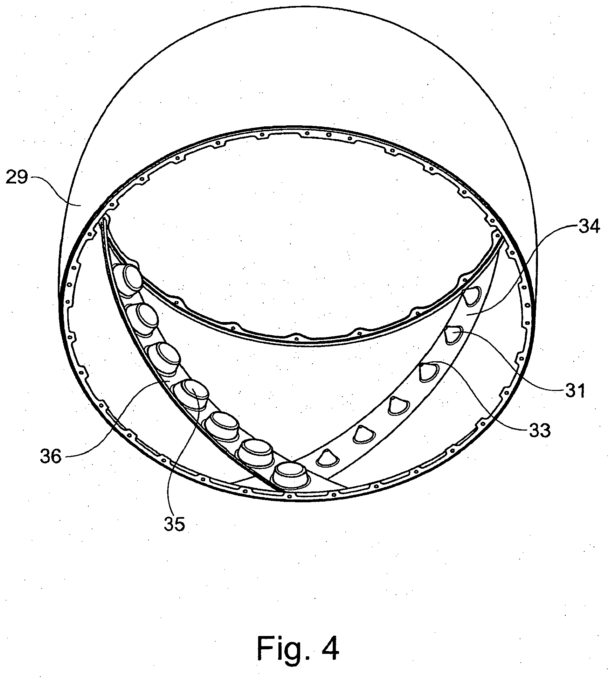

Die Fig. 3 und 4 zeigen jeweils perspektivische Teilansichten. Hieraus ist zu erkennen, dass die einzelnen trichterartigen Kegelelemente an einem ersten Trägerband 34 angeordnet oder ausgebildet sind, während die Napfelemente 35 an einem zweiten Trägerband 36 angeordnet oder ausgebildet sind. Die Dimensionierung und der Abstand der Mittelachsen der Kegelelemente 31 und der Napfelemente 35 ist so gewählt, dass die beiden Trägerbänder 34 und 36 aufeinanderliegend montiert werden können, um das in Fig. 2 gezeigte Dämpfungselement oder Absorptionselement zu bilden. Weiterhin zeigen die Fig. 3 und 4 einen vorderen Flansch 37 sowie einen hinteren Flansch 38.

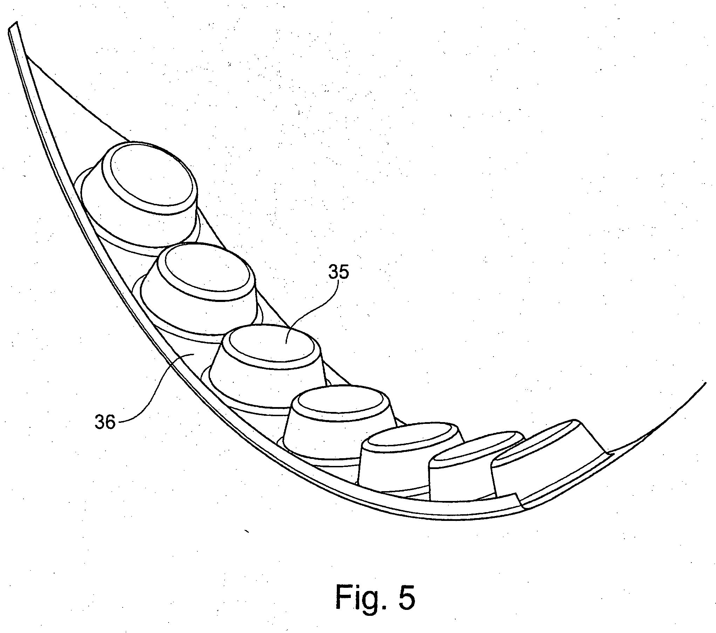

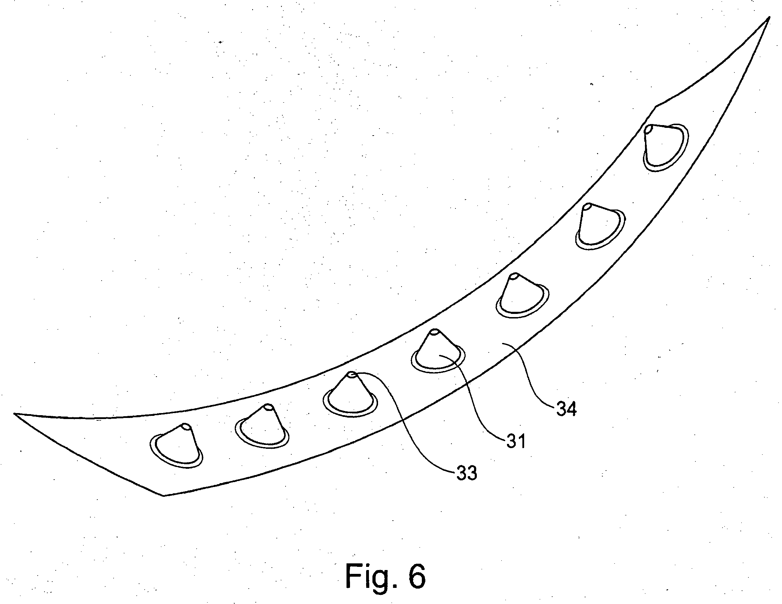

Die Trägerbänder 34 und 36 mit den zugeordneten trichterartigen Kegelelementen 31 bzw. den Napfelementen 35 sind in vergrößerter perspektivischer Teildarstellung nochmals in den Fig. 5 und 6 gezeigt. Daraus ergibt sich, dass die Trägerbänder 34, 36 entweder flach und streifenförmig ausgebildet sein können oder auch eine Randbördelung aufweisen können.

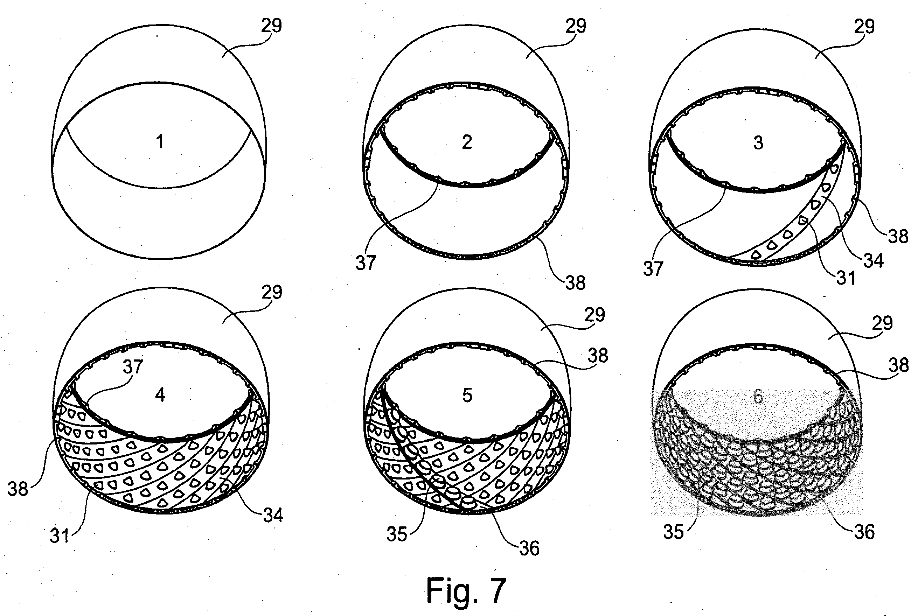

Die Fig. 7 zeigt die Herstellungsweise des erfindungsgemäßen Gasturbinenabgaskonus. In der Darstellung 1 gemäß Fig. 7 ist schematisch eine Außenwandung 29 dargestellt, welche ballig oder leicht kegelförmig ausgebildet sein kann und einen kreisrunden Querschnitt aufweist. Im Schritt 2 gemäß Fig. 7 werden die Flansche 37 und 38 an der Außenwandung 29 mittels eines geeigneten Fügeverfahrens befestigt, beispielsweise durch Schweißen oder Löten oder in anderer geeigneter Weise.

Im Schritt 3 gemäß Fig. 7 werden erste Trägerbänder 34 eingelegt und mit den Flanschen 37 und 38 verbunden. Die einzelnen Trägerbänder 34 sind parallel zueinander angeordnet, so wie dies in Schritt 4 der Fig. 7 dargestellt ist. Es ergibt sich somit eine geschlossene, in sich stabile Form, da die einzelnen Trägerbänder sowohl mit den Flanschen 37 und 38 als auch miteinander gefügt sind.

In einem nachfolgenden Schritt 5 gemäß Fig. 7 werden auf die Innenseite der ersten Trägerbänder 34 zweite Trägerbänder 36 aufgelegt, welche die Napfelemente 35 tragen. Die Napfelemente 35 nehmen somit die einzelnen trichterartigen Kegelelemente 31 auf. Auch die zweiten Trägerbänder 36 werden sowohl miteinander als auch mit den Flanschen 37 und 38 gefügt, so dass sich die im Schritt 6 gemäß Fig. 7 gezeigte Struktur ergibt.

Es versteht sich, dass erfindungsgemäß auch auf die reale Ausbildung der Außenwandung 29 verzichtet werden kann, da die miteinander gefügten ersten Trägerbänder 34 bereits eine ausreichend stabile äußere Wandung bilden können, nachdem sie miteinander gefügt wurden.

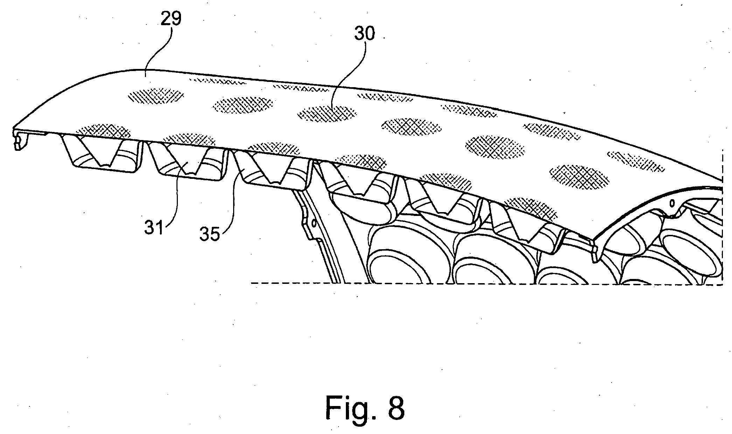

Die Fig. 8 zeigt eine perspektivische Teilansicht der fertiggestellten Wandung des erfindungsgemäßen Gasturbinenabgaskonus oder akustischen Absorbers. Hierbei sind insbesondere Ausnehmungen 30 erkennbar, welche als singuläre Ausnehmungen vorgesehen sind und den einzelnen Kegelelementen 31 passend zugeordnet sind. Die Ausnehmungen 30 können entweder in der Außenwandung 29 ausgebildet sein. Wenn auf eine physische Außenwandung 29 verzichtet wird, ergeben sich die Ausnehmungen durch die in den ersten Trägerbändern 34 vorgesehenen Ausnehmungen.

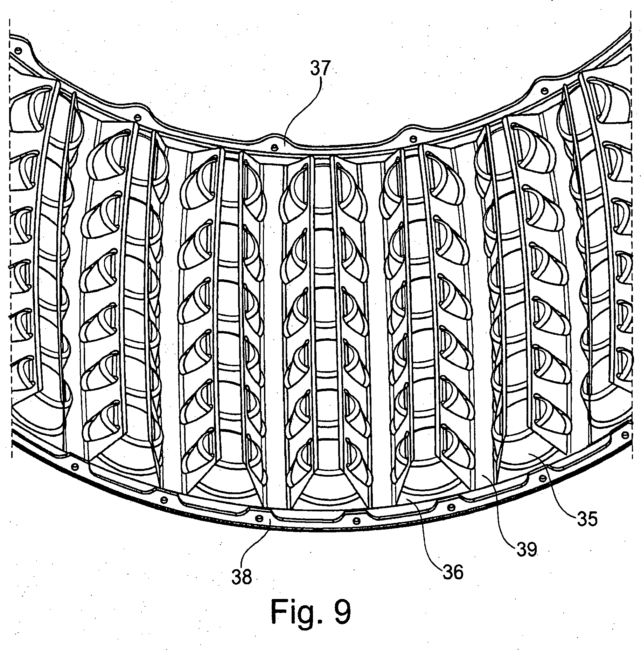

Die Fig. 9 zeigt eine perspektivische Innenansicht eines weiteren Ausführungsbeispiels, bei welchem zusätzliche längliche Versteifungselemente 39 eingelegt sind, welche mit den Napfelementen 35 und/oder den zweiten Trägerbändern 36 gefügt sind, um eine zusätzliche Stabilisierung der Struktur zu erzielen.

### Bezugszeichenliste:

- 1: Triebwerksachse / zentrische Achse
- 10: Gasturbinentriebwerk
- 11: Lufteinlass
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse / Verkleidung
- 22: Kompressorlaufschaufeln
- 23: Leitschaufeln
- 24: Turbinenschaufeln
- 26: Kompressortrommel oder -scheibe
- 27: Turbinenrotornabe
- 28: Abgaskonus
- 29: Außenwandung
- 30: Ausnehmung
- 31: Trichterartiges Kegelelement
- 32: Öffnung
- 33: Öffnung
- 34: Erstes Trägerband
- 35: Napfelement
- 36: Zweites Trägerband
- 37: Vorderer Flansch
- 38: Hinterer Flansch
- 39: Versteifungselement

## Patentansprüche

1. Verfahren zur Herstellung eines Schallabsorbers, dessen Außenwandung (29) mit einer Vielzahl von Ausnehmungen (30) versehen ist, mit innerhalb des Schallabsorbers jeweils den Ausnehmungen (30) zugeordneten trichterartigen Kegelelementen (31), welche eine im Durchmesser größere radial nach außen weisende Öffnung (32) und eine kleinere radial nach innen weisende Öffnung (33) aufweisen, wobei benachbarte Kegelelemente (31) jeweils an einem streifenförmigen ersten Trägerband (34) ausgebildet werden, mit radial innerhalb zu den Kegelelementen (31) angeordneten, jeweils ein Kegelelement (31) aufnehmenden Napfelementen (35), wobei benachbarte Napfelemente (35) jeweils an einem streifenförmigen zweiten Trägerband (36) ausgebildet werden, wobei die ersten Trägerbänder (34) nebeneinander in einer ersten Richtung angeordnet und die zweiten Trägerbänder (36) nebeneinander in einer zweiten Richtung angeordnet werden, wobei sich die Richtungen überkreuzen und die Trägerbänder (34, 36) zur Ausbildung eines starren Körpers miteinander und mit der Außenwandung (29) gefügt werden.

2. Verfahren nach Anspruch 1, **dadurch gekennzeichnet, dass** die Kegelelemente (31) und/oder die Napfelemente (35) durch einen Umformvorgang aus dem Trägerband (34, 36) gefertigt oder als separate Teile gefertigt und mit dem mit Ausnehmungen versehenen Trägerband (34, 36) gefügt werden.

3. Verfahren nach Anspruch 1 oder 2, **dadurch gekennzeichnet, dass** die Trägerbänder (34, 36) in einem Winkel zu einer zentrischen Achse (1) des Gasturbinenabgaskonus angeordnet werden.

4. Gasturbinenabgaskonus, dessen Außenwandung (29) mit einer Vielzahl von Ausnehmungen (30) versehen ist, mit innerhalb des Gasturbinenabgaskonus (28), jeweils den Ausnehmungen (30) zugeordneten trichterartigen Kegelelementen (31), welche eine im Durchmesser größere radial nach außen weisende Öffnung (32) und eine kleinere radial nach innen weisende Öffnung (33) aufweisen, wobei benachbarte Kegelelemente (31) jeweils an einem streifenförmigen ersten Trägerband (34) angeordnet sind, mit radial innerhalb zu den Kegelelementen (31) angeordneten, jeweils ein Kegelelement (31) aufnehmenden Napfelementen (35), wobei benachbarte Napfelemente (35) jeweils an einem streifenförmigen zweiten Trägerband (36) angeordnet sind, wobei die ersten Trägerbänder (34) nebeneinander in einer ersten Richtung angeordnet und die zweiten Trägerbänder (36) nebeneinander in einer zweiten Richtung angeordnet sind, wobei sich die Richtungen überkreuzen und die Trägerbänder (34, 36) zur Ausbildung eines starren Körpers miteinander und mit der Außenwandung (29) gefügt sind.

5. Gasturbinenabgaskonus nach Anspruch 4, **dadurch gekennzeichnet, dass** die Kegelelemente (31) und/oder die Napfelemente (35) durch einen Umformvorgang aus dem Trägerband (34, 36) gefertigt oder als separate Teile gefertigt und mit dem mit Ausnehmungen versehenen Trägerband (34, 36) gefügt sind und/oder dass die Trägerbänder (34, 36) in einem Winkel zu einer zentrischen Achse (1) des Gasturbinenabgaskonus angeordnet sind.

6. Gasturbinenabgaskonus nach Anspruch 4 oder 5, **dadurch gekennzeichnet, dass** die Kegelelemente (31) in radialer Richtung eine Höhe aufweisen, welche geringer ist als die Tiefe der Napfelemente (35).

7. Gasturbinenabgaskonus nach einem der Ansprüche 4 bis 6, **dadurch gekennzeichnet, dass** die Außenwandung (29) mit einer eine Vielzahl von Ausnehmungen aufweisenden Perforation oder mit singulären, jeweils einzeln einem Kegelelement (31) zugeordneten Ausnehmungen (30) versehen ist.

8. Gasturbinenabgaskonus nach einem der Ansprüche 4 bis 7, **dadurch gekennzeichnet, dass** im Bereich der Außenwandung (29) eine Wabenstrukturschicht ausgebildet ist.

9. Gasturbinenabgaskonus nach einem der Ansprüche 1 bis 8, **dadurch gekennzeichnet, dass** die Außenwandung (29) doppelwandig mit zwischengeordneter Wabenstrukturschicht ausgebildet ist.

10. Gasturbinenabgaskonus nach einem der Ansprüche 1 bis 9, **dadurch gekennzeichnet, dass** die Trägerbänder (34, 36) an ihren Endbereichen jeweils mit einem Flansch (37, 38) verbunden sind.

11. Gasturbinenabgaskonus nach einem der Ansprüche 4 bis 10, **dadurch gekennzeichnet, dass** radial innerhalb der durch die gefügten zweiten Trägerbänder (36) gebildeten Struktur längliche, die Napfelemente (35) abstützende Versteifungselemente (39) angeordnet sind.

12. Gasturbinenabgaskonus nach einem der Ansprüche 4 bis 11, **dadurch gekennzeichnet, dass** die Versteifungselemente (39) zwischen benachbarten Reihen von Napfelementen (35) angeordnet sind.

13. Gasturbinenabgaskonus nach einem der Ansprüche 4 bis 12, **dadurch gekennzeichnet, dass** die Kegelelemente (31) und die Napfelemente (35) in Axialrichtung an Teilbereichen oder im Wesentlichen entlang der Gesamtlänge des Gasturbinenabgaskonus (28) vorgesehen sind.

14. Akustischer Absorber, umfassend einen Gasturbinenabgaskonus nach einem der Ansprüche 4 bis 13.

## Claims

1. Method for manufacturing a sound absorber, the outer wall (29) of which is provided with a plurality of recesses (30), with funnel-like cone elements (31) respectively assigned to the recesses (30) inside the sound absorber, said cone elements (31) having a larger opening (32) facing radially outwards and a smaller opening (33) facing radially inwards, with adjacent cone elements (31) each being provided on a strip-shaped first carrier band (34), with cup elements (35) being provided radially on the inside relative to the cone elements (31), and each cup element (35) receiving one cone element (31), with adjacent cup elements (35) each being provided on a strip-shaped second carrier band (36), with the first carrier bands (34) being arranged adjacently in a first direction, and the second carrier bands (36) being arranged adjacently in a second direction, with the directions crossing each other and the carrier bands (34, 36) being joined to one another and to the outer wall (29) in order to form a rigid body.

2. Method in accordance with Claim 1, **characterized in that** the cone elements (31) and/ or the cup elements (35) are manufactured either by a forming operation from the carrier band (34, 36) or as separate parts and joined to the carrier band (34, 36) provided with recesses.

3. Method in accordance with Claim 1 or 2, **characterized in that** the carrier bands (34, 36) are arranged at an angle to a center axis (1) of the gas-turbine exhaust cone.

4. Gas-turbine exhaust cone, the outer wall (29) of which is provided with a plurality of recesses (30), with funnel-like cone elements (31) respectively assigned to the recesses (30) inside the gas-turbine exhaust cone (28), said cone elements (31) having a larger opening (32) facing radially outwards and a smaller opening (33) facing radially inwards, with adjacent cone elements (31) each being provided on a strip-shaped first carrier band (34), with cup elements (35) being provided radially on the inside relative to the cone elements (31), and each cup element (35) receiving one cone element (31), with adjacent cup elements (35) each being provided on a strip-shaped second carrier band (36), with the first carrier bands (34) being arranged adjacently in a first direction, and the second carrier bands (36) being arranged adjacently in a second direction, with the directions crossing each other and the carrier bands (34, 36) being joined to one another and to the outer wall (29) in order to form a rigid body.

5. Gas-turbine exhaust cone in accordance with Claim 4, **characterized in that** the cone elements (31) and/ or the cup elements (35) are manufactured either by a forming operation from the carrier band (34, 36) or as separate parts and joined to the carrier band (34, 36) provided with recesses and/ or that the carrier bands (34, 36) are arranged at an angle to a center axis (1) of the gas-turbine exhaust cone.

6. Gas-turbine exhaust cone in accordance with Claim 4 or 5, **characterized in that** the cone elements (31) have, in the radial direction, a height which is less than the depth of the cup elements (35).

7. Gas-turbine exhaust cone in accordance with one of the Claims 4 to 6, **characterized in that** the outer wall (29) is provided with a perforation featuring a plurality of recesses or with singular recesses (30), each recess being individually assigned to a cone element (31).

8. Gas-turbine exhaust cone in accordance with one of the Claims 4 to 7, **characterized in that** in the area of the outer wall (29) a honeycomb-structured layer is provided.

9. Gas-turbine exhaust cone in accordance with one of the Claims 1 to 8, **characterized in that** the outer wall (29) is designed double-walled with a honeycomb-structured layer arranged in between.

10. Gas-turbine exhaust cone in accordance with one of the Claims 1 to 9, **characterized in that** the carrier bands (34, 36) at their end areas are each connected to a flange (37, 38).

11. Gas-turbine exhaust cone in accordance with one of the Claims 4 to 10, **characterized in that** elongated stiffening elements (39) are arranged radially inside the structure formed by the joined second carrier bands (36), said stiffening elements (39) supporting the cup elements (35).

12. Gas-turbine exhaust cone in accordance with one of the Claims 4 to 11, **characterized in that** the stiffening elements (39) are arranged between adjacent rows of cup elements (35).

13. Gas-turbine exhaust cone in accordance with one of the Claims 4 to 12, **characterized in that** the cone elements (31) and the cup elements (35) are provided in the axial direction at partial areas or essentially along the entire length of the gas-turbine exhaust cone (28).

14. Acoustic absorber including a gas-turbine exhaust cone in accordance with one of the Claims 4 to 13.

## Revendications

1. Procédé destiné à fabriquer un absorbeur acoustique dont la paroi extérieure (29) est munie d'une pluralité d'évidements (30), avec à l'intérieur de l'absorbeur acoustique des éléments coniques (31) en entonnoir qui sont respectivement associés aux évidements (30) et présentent une ouverture (32) de grand diamètre orientée radialement vers l'extérieur et une ouverture (33) de petit diamètre orientée radialement vers l'intérieur, sachant que des éléments coniques (31) adjacents sont respectivement formés sur un premier ruban porteur (34) en forme de bande, avec des éléments coupelles (35) disposés radialement à l'intérieur par rapport aux éléments coniques (31) et logeant chacun un élément conique (31), sachant que des éléments coupelles (35) adjacents sont respectivement formés sur un deuxième ruban porteur (36) en forme de bande, que les premiers rubans porteurs (34) sont disposés côte à côte dans une première direction et les deuxièmes rubans porteurs (36) sont disposés côte à côte dans une seconde direction, sachant que les directions se croisent et que les rubans porteurs (34, 36) sont assemblés entre eux et avec la paroi extérieure (29) afin de former un corps rigide.

2. Procédé selon la revendication n° 1, **caractérisé en ce que** les éléments coniques (31) et/ ou les éléments coupelles (35) sont façonnés à partir du ruban porteur (34, 36) par une opération de formage, ou en tant que pièces distinctes, et sont assemblés avec le ruban porteur (34, 36) muni d'évidements.

3. Procédé selon la revendication n° 1 ou n° 2, **caractérisé en ce que** les rubans porteurs (34, 36) sont disposés selon un angle par rapport à un axe central (1) du cône d'échappement de turbine à gaz.

4. Cône d'échappement de turbine à gaz, dont la paroi extérieure (29) est munie d'une pluralité d'évidements (30), avec à l'intérieur du cône d'échappement de turbine à gaz (28) des éléments coniques (31) en entonnoir qui sont respectivement associés aux évidements (30) et présentent une ouverture (32) de grand diamètre orientée radialement vers l'extérieur et une ouverture (33) de petit diamètre orientée radialement vers l'intérieur, sachant que des éléments coniques (31) adjacents sont respectivement formés sur un premier ruban porteur (34) en forme de bande, avec des éléments coupelles (35) disposés radialement à l'intérieur par rapport aux éléments coniques (31) et logeant chacun un élément conique (31), sachant que des éléments coupelles (35) adjacents sont respectivement formés sur un deuxième ruban porteur (36) en forme de bande, que les premiers rubans porteurs (34) sont disposés côte à côte dans une première direction et les deuxièmes rubans porteurs (36) sont disposés côte à côte dans une seconde direction, sachant que les directions se croisent et que les rubans porteurs (34, 36) sont assemblés entre eux et avec la paroi extérieure (29) afin de former un corps rigide.

5. Cône d'échappement de turbine à gaz selon la revendication n° 4, **caractérisé en ce que** les éléments coniques (31) et/ ou les éléments coupelles (35) sont façonnés à partir du ruban porteur (34, 36) par une opération de formage, ou en tant que pièces distinctes, et sont assemblés avec le ruban porteur (34, 36) muni d'évidements, et/ ou que les rubans porteurs (34, 36) sont disposés selon un angle par rapport à un axe central (1) du cône d'échappement de turbine à gaz.

6. Cône d'échappement de turbine à gaz selon la revendication n° 4 ou n° 5, **caractérisé en ce que** dans le sens radial, les éléments coniques (31) présentent une hauteur inférieure à la profondeur des éléments coupelles (35).

7. Cône d'échappement de turbine à gaz selon une des revendications n° 4 à n° 6, **caractérisé en ce que** la paroi extérieure (29) est munie d'une perforation présentant une pluralité d'évidements, ou munie d'évidements (30) singuliers, chacun desquels étant associé à un élément conique (31).

8. Cône d'échappement de turbine à gaz selon une des revendications n° 4 à n° 7, **caractérisé en ce que** dans la zone de la paroi extérieure (29) est formée une couche de structure alvéolaire.

9. Cône d'échappement de turbine à gaz selon une des revendications n° 1 à n° 8, **caractérisé en ce que** la paroi extérieure (29) est conçue en tant que double paroi avec une couche de structure alvéolaire intercalaire.

10. Cône d'échappement de turbine à gaz selon une des revendications n° 1 à n° 9, **caractérisé en ce qu'**à leurs extrémités, les rubans porteurs (34, 36) sont respectivement reliés à une bride (37, 38).

11. Cône d'échappement de turbine à gaz selon une des revendications n° 4 à n° 10, **caractérisé en ce que** radialement à l'intérieur de la structure formée par les deuxièmes rubans porteurs (36) assemblés sont disposés des éléments raidisseurs (39) oblongs supportant les éléments coupelles (35).

12. Cône d'échappement de turbine à gaz selon une des revendications n° 4 à n° 11, **caractérisé en ce que** les éléments raidisseurs (39) sont disposés entre des rangées voisines d'éléments coupelles (35).

13. Cône d'échappement de turbine à gaz selon une des revendications n° 4 à n° 12, **caractérisé en ce que** dans le sens axial, les éléments coniques (31) et les éléments coupelles (35) sont prévus dans des zones partielles ou essentiellement tout le long du cône d'échappement de turbine à gaz (28).

14. Absorbeur acoustique comprenant un cône d'échappement de turbine à gaz selon une des revendications n° 4 à n° 13.
